Europäisches Patentamt

European Patent Office

Office européen des brevets

(19)

(11) Veröffentlichungsnummer: **0 262 360 B1**

(12) **EUROPÄISCHE PATENTSCHRIFT**

(45) Veröffentlichungstag der Patentschrift: **03.06.92**

(21) Anmeldenummer: **87111740.4**

(22) Anmeldetag: **13.08.87**

(51) Int. Cl.5: **B65H 3/08**, B65H 3/12, B65G 47/91

(54) **Vorrichtung zum Aufnehmen und Ablegen von Zuschnitten.**

(30) Priorität: **03.09.86 DE 3629968**

(43) Veröffentlichungstag der Anmeldung:
**06.04.88 Patentblatt 88/14**

(45) Bekanntmachung des Hinweises auf die
Patenterteilung:
**03.06.92 Patentblatt 92/23**

(84) Benannte Vertragsstaaten:
**FR GB**

(56) Entgegenhaltungen:
**DE-A- 1 761 281**
**DE-A- 2 915 718**
**US-A- 4 362 461**

(73) Patentinhaber: **Deutsche Airbus GmbH**
**Kreetslag 10**
**W-2103 Hamburg 93(DE)**

(72) Erfinder: **Mense, Lorenz**
**Horner Landstrasse 69**
**W-2000 Hamburg 74(DE)**

EP 0 262 360 B1

## Beschreibung

Die Erfindung bezieht sich auf eine Vorrichtung nach dem Oberbegriff des Anspruchs 1.

Dabei werden die Zuschnitte durch einen von der Vorrichtung her wirkenden Unterdruck angehoben. Derartige Saugheber sind im Prinzip bekannt. So zeigt die US-A-4362 461, einen selektiven Vakuumheber zum Anheben Transportieren und Ablegen von Glasscheiben. Dabei geschieht das Transportieren durch einen an einer Portaleinrichtung angeordneten verfahrbaren Träger. Die Unterseite des Trägers schwebt dicht über den Glasscheiben und ist mit Öffnungen versehen, wodurch ein innerhalb des Trägers bestehender Unterdruck auf die Scheiben wirken kann. Der Innenraum des Trägers ist in seiner Längsrichtung in mehrere Kammern unterteilt, wobei in jeder Kammer eine schwenkbare Klappe angeordnet ist, wodurch die zu der jeweiligen Kammer gehörenden Öffnungen individuell mit einer Unterdruckleitung verbunden oder von dieser getrennt werden können. Die Einrichtung wird eingesetzt, wenn die in einer Inspektions-Station mittels eines Rollenförderers eingetroffenen Scheiben inspiziert worden sind und jetzt die guten Scheiben vom Ausschuß getrennt werden sollen. Hierzu werden die oberhalb von Ausschußscheiben befindlichen Kammern durch Einstellung der betreffenden Klappen vom Unterdruckbereich abgetrennt, so daß nur die guten Scheiben mittels des Vakuumhebers zur nächsten Arbeits-Station verbracht werden. Die von diesen Vakuumheber anzuhebenden Glasscheiben sind in Form und Abmessungen stets identisch und erscheinen innerhalb der Inspektions-Station stets an identischen Positionen. Daher sind die auf der Unterseite des besagten Trägers befindlichen Öffnungen gruppenweise jeweils einer Scheibe zugeordnet, wobei jede der so definierten Gruppen ihrerseits einer Klappe zum Zu- oder Abschalten des Unterdrucks zugeordnet ist. Hieraus ergibt sich, daß dieser Vakuumheber zum Anheben einzelner Zuschnitte aus einer Anzahl von Zuschnitten beliebiger Form und zum Ablegen derselben nicht geeignet ist.

Durch die DE-A-2 915 718, die sich auf einen Sauger für Bogenanleger bezieht, ist es bekannt, eine axial durchbohrte Kolbenstange mit Hilfe von Unterdruck aus einer Ruheposition in eine Arbeitsposition zu verschieben. Diesem Dokument ist jedoch kein Hinweis zu entnehmen, der zu einem Vakuumheber für Zuschnitte von unterschiedlicher Form führen könnte.

Demgemäß liegt der Erfindung die Aufgabe zugrunde, eine gattungsgemäße Vorrichtung derart auszubilden, daß deren wirksame Saugfläche an die Geometrie eines aufzunehmenden Zuschnittes anpaßbar ist, wobei andere möglicherweise von der Vorrichtung überdeckte Zuschnitte weder berührt noch aufgenommen werden.

Diese Aufgabe wird bei einer gattungsgemäßen Vorrichtung dadurch gelöst, daß jedes Saugrohr höhenverstellbar in der Aufnahme angeordnet ist und gegen den Druck einer Feder über einen zugeordneten Hubmagneten aus einer von der Vakuumzuführung abgetrennten zurückgezogenen Ruheposition, in der das Saugrohr an einer Deckplatte anliegt, in eine mit der Vakuumzuführung verbundene, aus der Aufnahme hervortretenden Arbeitsposition einstellbar ist, wobei die Ansteuerung der Hubmagnete entsprechend der vorliegenden Form des Zuschnittes über einen Rechner erfolgt.

Dabei ist insbesondere von Vorteil, daß die wirksame Saugfläche der Vorrichtung an die Geometrie eines aufzuhebenden Zuschnittes anpaßbar ist, so daß ein bestimmter Zuschnitt gezielt aus einer Gruppe von eng benachbarten Zuschnitten sicher aufgenommen werden kann.

Eine einfache Abdichtung zur Vakuumzuführung wird dadurch geschaffen, daß das Saugrohr mit seiner Eintrittsöffnung in der zurückgezogenen Ruheposition an einem zugeordneten Dichtgummielement der Deckplatte als Abschluß anliegt.

Für das Heben von Kunststoff- und Glasplatten wird vorgeschlagen, daß die Saugöffnungen der Saugrohre durch Saugnäpfe gebildet sind.

Um die Einrichtung der Vorrichtung auf wiederholt eingesetzte unterschiedliche Werkstücke zu vereinfachen, ist vorgesehen, daß die einzelnen Saugrohre entsprechend der vorliegenden Zuschnittsgeometrie und/oder des Gewichtes des Zuschnittes über einen Rechner ansteuerbar sind.

In der Zeichnung ist ein Ausführungsbeispiel der Erfindung schematisch dargestellt. Es zeigen:

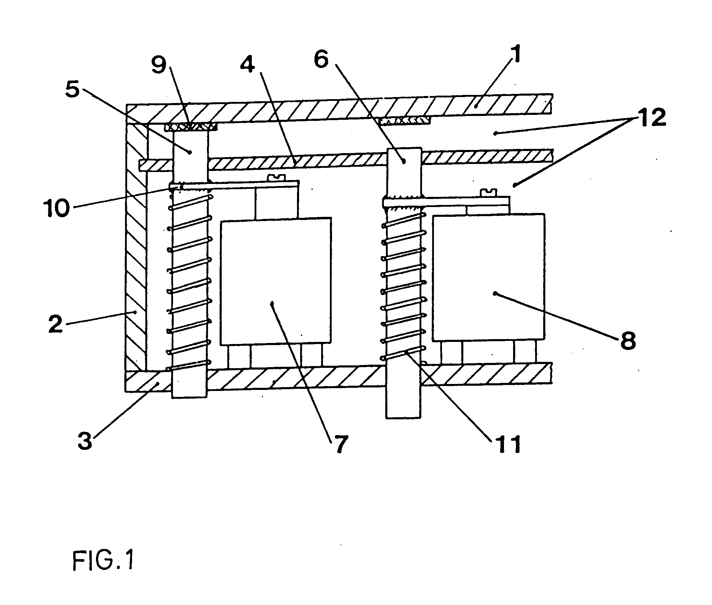

Fig. 1    einen Teilschnitt durch eine Vorrichtung,

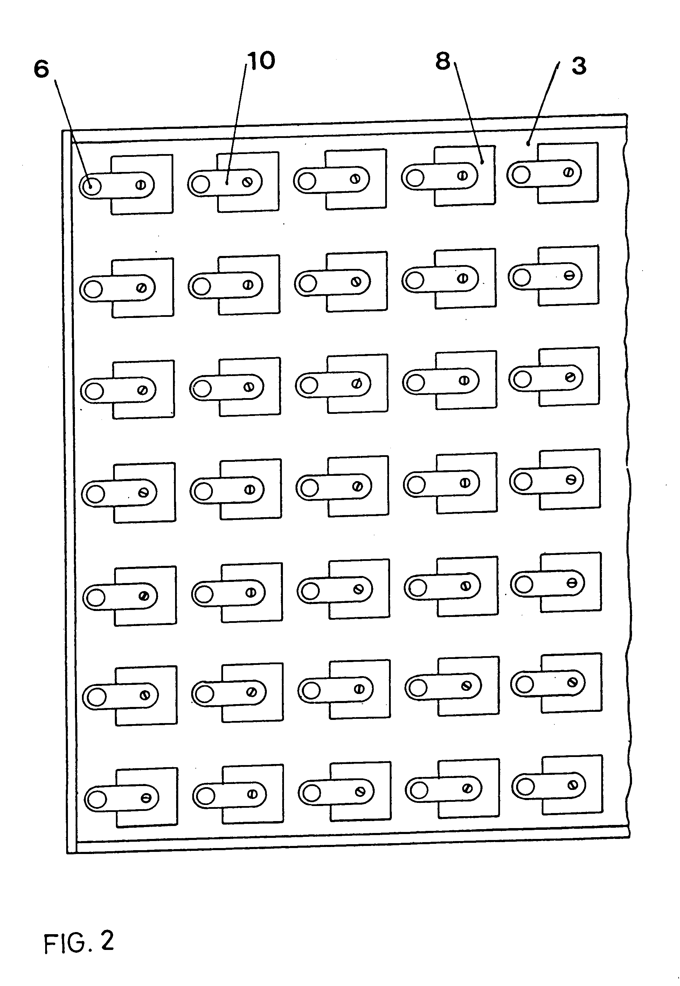

Fig. 2    eine Teildraufsicht auf eine Aufnahmefläche ohne Deck- und Führungsplatte.

Bei der dargestellten Ausbildung wird die Aufnahme durch eine kastenförmige Anordnung aus Deckplatte 1, Seitenwand 2 und Bodenplatte 3 gebildet. Der dadurch umschlossene Raum wird als Vakuumraum 12 mit einem nicht näher dargestellten Vakuumerzeuger versorgt. Die Bodenplatte 3 als Aufnahmebereich für ein Werkstück besitzt Öffnungen zum Druchtritt von rasterförmig angeordneten Saugrohren 5,6, die über Federn 11 in der zurückgezogenen Ruheposition gehalten werden und durch eine Führungsplatte 4 geführt sind. Dabei liegen die Saugrohre 5,6 in dieser Ruheposition an der Deckplatte 1 an und werden über ein zwischengeschaltetes Dichtgummielement 9 mit ihren Eintrittsöffnungen gegenüber dem Vakuumraum abgedichtet.

Jedes Saugrohr 5,6 ist über einen Betätigungshebel 10, der mit einem Hubmagneten 7,8 verbunden ist, in eine hervortretende Arbeitsposition einstellbar. Hierbei wird auch die Eintrittsöffnung des Saugrohres 5,6 freigegeben und mit dem Vakuumraum 12 verbunden. Somit ist jedes Saugrohr 5,6 über den zugeordneten Hubmagneten 7,8 auf einfache Weise individuell ansteuerbar und mit Vakuum versorgbar.

**Patentansprüche**

1. Vorrichtung zum Aufnehmen und Ablegen von Zuschnitten, wie Prepreg-, Stoff-, Folien- oder Plattenzuschnitte, in Form eines Vakuumhebers mit einer Vielzahl von Saugrohren (5,6), die zur Bildung von Saugöffnungen an einer Aufnahme (1,2,3) rasterartig verteilt angeordnet ist und jedes Saugrohr zur Vakuumzuführung individuell ansteuerbar ist, dadurch **gekennzeichnet,** daß jedes Saugrohr (5,6) höhenverstellbar in der Aufnahme angeordnet ist und gegen den Druck einer Feder (11) über einen zugeordneten Hubmagneten (7,8) aus einer von der Vakuumzuführung abgetrennten zurückgezogenen Ruheposition, in der das Saugrohr (5,6) an einer Deckplatte (1) der Aufnahme anliegt, in eine mit der Vakuumzuführung verbundene, aus der Aufnahme hervortretenden Arbeitsposition einstellbar ist, wobei die Ansteuerung der Hubmagnete (7,8) entsprechend der vorliegenden Form des Zuschnittes über einen Rechner erfolgt.

2. Vorrichtung nach Anspruch 1, dadurch **gekennzeichnet,** daß das Saugrohr (5,6) mit seiner Eintrittsöffnung in der zurückgezogenen Ruheposition an einem zugeordneten Dichtungselement (9) der Deckplatte (1) als Abschluß anliegt.

3. Vorrichtung nach Anspruch 1 oder 2, dadurch **gekennzeichnet,** daß die Saugöffnungen der Saugrohre (5,6) durch Saugnäpfe gebildet sind.

**Claims**

1. A device for picking up and depositing cut articles such as prepreg, fabric, foil or panel blanks, in the form of a vacuum lifter with a plurality of suction pipes (5, 6), which for the formation of suction apertures are arranged distributed in a raster-like manner on a reciver (1, 2, 3) and each suction pipe for the vacuum supply is individually controllable, characterised in that each suction pipe (5, 6) is arranged so as to be adjustable in height in the receiver and is adjustable by way of an associated lifting magnet (7, 8) and against the pressure of a spring (11) from a withdrawn rest position detached from the vacuum supply, in which the suction pipe (5, 6) butts against a cover plate (1) of the receiver, into a working position connected to the vacuum supply and protruding out of the receiver, in which respect the control of the lifting magnets (7, 8) is effected in accordance with the present shape of the blank by way of a computer.

2. A device according to claim 1, characterised in that the suction pipe (5, 6) butts in the withdrawn rest position with its intake aperture against an associated sealing element (9) of the cover plate (1) as a seal.

3. A device according to claim 1 or 2, characterised in that the suction apertures of the suction pipes (5, 6) are formed by suction cups.

**Revendications**

1. Dispositif pour saisir et déposer des découpes, telles que des découpes en préimprégnés, en tissus, en feuilles ou en plaques, se présentant sous la forme d'un dispositif de levage à dépression comportant une pluralité de tubes d'aspiration (5, 6) qui sont répartis en réseau sur un support (1, 2, 3) pour former des ouvertures d'aspiration, chaque tube d'aspiration pouvant être commandé individuellement par rapport à la conduite de pression négative, caractérisé en ce que chaque tube d'aspiration (5, 6) est monté dans le support avec possibilité de réglage en hauteur et peut être amené par un électro-aimant moteur (7, 8) associé, à l'encontre de la pression d'un ressort (11), d'une position de repos rentrée, isolée par rapport à la conduite de pression négative, dans laquelle le tube d'aspiration (5, 6) est appliqué contre une plaque de couverture (1) du support, vers une position de travail sortie du support dans laquelle il communique avec la conduite de pression négative, les électro-aimants (7, 8) moteur étant commandés au moyen d'un calculateur en fonction de la forme rencontrée de la découpe.

2. Dispositif selon la revendication 1, caractérisé en ce que, en position de repos rentrée, le tube d'aspiration (5, 6) est appliqué par son ouverture d'entrée contre un élément d'étanchéité (9) associé de la plaque de couverture (1) servant d'obturateur.

3. Dispositif selon la revendication 1 ou 2, caractérisé en ce que les ouvertures d'aspiration des tubes d'aspiration (5, 6) sont formées par des ventouses.

FIG.1

FIG. 2